Europäisches Patentamt

European Patent Office

Office européen des brevets

(11) Numéro de publication : **0 444 988 A1**

(12) ## DEMANDE DE BREVET EUROPEEN

(21) Numéro de dépôt : **91400308.2**

(22) Date de dépôt : **08.02.91**

(51) Int. Cl.⁵ : **B23P 19/04**

(30) Priorité : **02.03.90 FR 9002688**

(43) Date de publication de la demande :
**04.09.91 Bulletin 91/36**

(84) Etats contractants désignés :
**AT BE CH DE DK ES GB GR IT LI LU NL SE**

(71) Demandeur : **FERCO INTERNATIONAL Usine de Ferrures de Bâtiment Société à responsabilité limitée**
**2, rue du Vieux-Moulin Reding**
**F-57400 Sarrebourg (FR)**

(72) Inventeur : **Kautt, Jean-Jacques**
**24 rue Pertois**
**F-67000 Strasbourg (FR)**

(74) Mandataire : **Rodhain, Claude et al**
**Cabinet Claude Rodhain 30, rue la Boétie**
**F-75008 Paris (FR)**

(54) **Machine automatique de pose de composants sur dormants de portes ou fenêtres.**

(57)    La machine est destinée à équiper des dormants de portes ou fenêtres destinés à supporte un ou plusieurs ouvrants et en particulier destinée à la pose de paliers d'angle, de paliers de compas, et de paliers intermédiaires sur les montants de l'ouvrant.

Elle comporte une poutre fixe (11) supportant un poste fixe (13), un poste mobile (14) et une bande de transfert (15) et une poutre mobile (12) supportant un poste fixe (16), un poste mobile (17) et une bande de transfert (18).

Les postes fixes (13, 16) sont équipés de moyens automatiques d'alimentation et de pose de composants à un angle du dormant tandis que les postes mobiles (14, 17) sont équipés de moyens automatiques d'alimentation et de pose de composants à un autre angle du dormant, ces moyens étant mis en action simultanément.

EP 0 444 988 A1

FIG.1

# MACHINE AUTOMATIQUE DE POSE DE COMPOSANTS SUR DORMANTS DE PORTES OU FENETRES

La présente invention concerne une machine automatique de pose de composants sur dormants de fenêtres, porte-fenêtres, portes ou analogues.

Cette machine est destinée à équiper des dormants de portes ou fenêtres destinés à supporter un ou plusieurs ouvrants. Les dormants sont en général constitués de deux montants reliés par deux traverses inférieure et supérieure. Dans le cas où le dormant est destiné à recevoir plus d'ouvrants, il peut être équipé d'au moins un montant supplémentaire entre les deux montants extérieurs ou d'au moins une traverse supplémentaire située entre les traverses inférieure et supérieure. En général, l'équipement du dormant d'une traverse intermédiaire correspond à la réalisation d'une porte-fenêtre par exemple seule une partie du dormant étant alors équipé d'ouvrants.

La présente invention propose une machine automatique d'un dormant de fenêtre ou porte-fenêtre avec ses composants destinés à permettre le support ou le déplacement du ou des ouvrants dont sera équipé le dormant.

Ces composants sont principalement ceux qui permettent la rotation ou le pivotement ou le basculement de l'ouvrant tels que : les paumelles, les paliers de compas, les paliers de support d'angle, les paliers de pivot, etc... Pour les ouvrants de grande hauteur, pour assurer le bon maintien périphérique de l'ouvrant sur le dormant et plus particulièrement du montant sur lequel se trouvent les axes de rotation, il peut être nécessaire d'équiper le dormant d'au moins un palier intermédiaire.

De façon plus précise on a en général les paliers situés dans l'angle supérieur du dormant et appelés paliers de compas, les paliers situés dans l'angle inférieur du dormant et appelés paliers de support d'angle, avec donc éventuellement un ou plusieurs paliers intermédiaires disposés sur les montants entre les deux dits paliers et pouvant être remplacés par des paumelles dans d'autres applications.

A l'origine et de façon relativement courante encore de nos jours, chacun de ces composants est posé et fixé manuellement. Cependant de plus en plus cette pose est devenue semi-automatique dans le sens où sont proposées des machines automatiques permettant l'équipement d'un des montants du dormant, le traitement de l'autre montant se faisant par retournement manuel du dormant. De plus, les outils de pose et de fixation sont en général spécifiques et adaptés strictement aux composants à mettre en place.

Lorsque ces dispositifs sont montés en ligne, l'opération consiste à présenter successivement chaque côté du dormant à chacun des outils et l'ensemble manque de rationalité, l'intervention humaine indispensable limitant la productivité par rapport à un automate.

Grâce à la machine conforme à l'invention, l'équipement complet du dormant est totalement automatique à partir de l'amenage de celui-ci jusqu'à sa dépose équipé de composants.

Pour ce faire l'objet de l'invention est tout d'abord une unité élémentaire d'équipement de dormants constituée d'une unité automatique de pose de composants sur dormants simples ou multiples de fenêtres, porte-fenêtres, portes ou équivalents, en particulier destinée à la pose de paliers d'angle, de paliers de compas, et de paliers intermédiaires ou analogues, remarquable en ce qu'elle comporte un dispositif d'amenage des dormants préfabriqués et assurant l'alimentation automatique de ceux-ci et au moins un poste équipé de moyens automatiques d'alimentation, de pose et de fixation de composants sur les montants du dormant ; ces moyens peuvent être mis en action simultanément ou non.

Selon un premier mode de réalisation préféré, un telle unité comporte au moins une poutre supportant au moins un poste ainsi équipé.

Selon un second mode de réalisation préféré, l'invention concerne une machine automatique de pose de composants sur dormants simples et multiples de portes ou fenêtres, en particulier destinée à la pose de paliers d'angle, de paliers de compas, de paliers intermédiaires ou équivalents portant deux unités automatiques telles que précisées ci-dessus et remarquable en ce que :

– l'une des poutres est fixe et supporte un poste fixe, un poste mobile et une bande de transfert ;

– l'autre poutre est mobile et supporte un poste fixe, un poste mobile et une bande de transfert, ces deux poutres étant parallèles l'une à l'autre, le poste mobile de la poutre fixe étant maître et le poste mobile de la poutre mobile étant esclave.

L'invention est exposée ci-après plus en détail à l'aide de dessins représentant essentiellement un mode d'exécution.

– la figure 1 représente une vue générale de dessus de la machine conforme à l'invention ;

– les figures 2A et 2B sont des vues en coupe longitudinale et verticale et en vue de dessus du dispositif de bridage des postes fixes ;

– les figures 3A et 3B sont des vues en coupe longitudinale et verticale et en vue de dessus des dispositifs de bridage des postes mobiles ;

– les figures 4A et 4B sont des vues de dessus de deux variantes du plateau servant de magasin ;

– la figure 5 est une vue en coupe diamétrale et verticale du plateau magasin et de son dispositif d'entraînement ;

– la figure 6 est une vue de dessus dudit dispositif d'entraînement du plateau magasin ;

– la figure 7 est une vue de dessus représentant le plateau magasin et le manipulateur correspondant ;

– la figure 8 est une vue en coupe verticale dans son plan de symétrie du gabarit de pose et de son dispositif d'actionnement ;

– les figures 9A et 9B sont des vues de dessus et en coupe selon C du dispositif d'entraînement des modules d'outillage.

La description est relative plus précisément à l'équipement d'un cadre de dormants simples à deux montants et deux traverses. La même machine peut permettre l'équipement de dormants à plusieurs traverses ; dans ce cas, l'équipement est réalisé de façon séquentielle, à savoir équipement des montants par positionnement sur la traverse supérieure et la première traverse intermédiaire, sur la première traverse intermédiaire et la seconde,... jusqu'à positionnement sur la dernière traverse intermédiaire et la traverse inférieure.

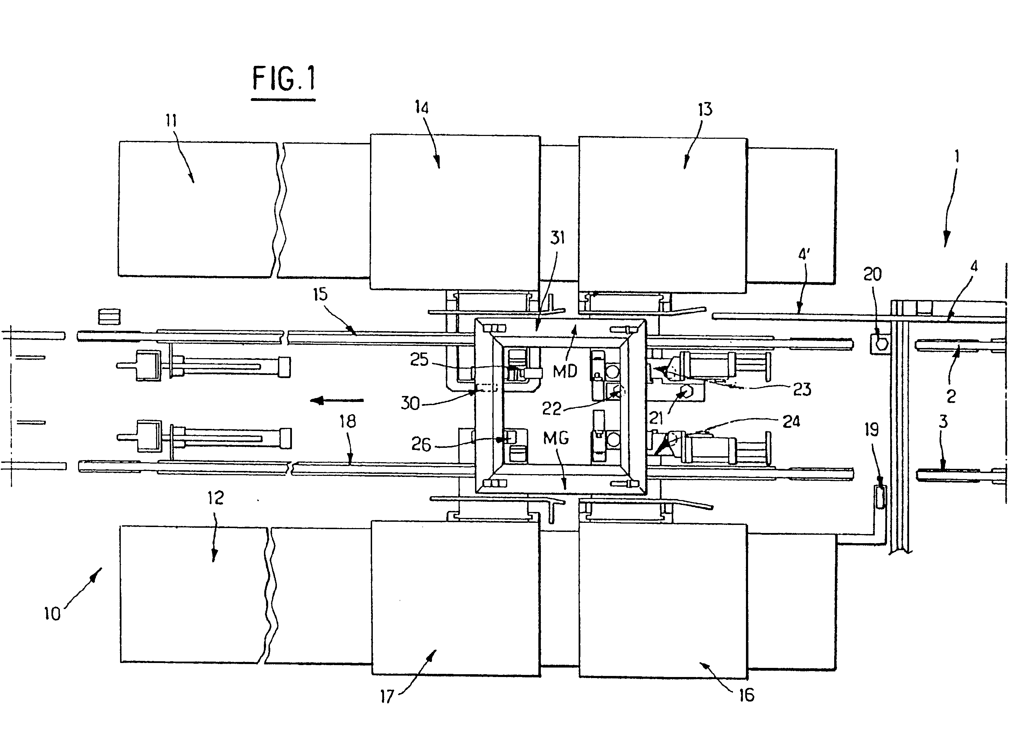

Comme le représente la figure 1, la machine conforme à l'invention est disposée en aval d'un dispositif d'amenage 1. Ce dispositif d'amenage 1 est constitué d'un tapis de transfert ou de bandes convoyeuses 2, 3 destinées à amener le dormant constitué de ses traverses et montants préfabriqués et assemblés.

Ce dispositif d'amenage comporte une rive latérale 4 destinée à guider latéralement le dormant et comme on peut le voir sur la figure alignée ou prolongée en direction de la machine automatique 10. Le dormant est amené face externe sur le dispositif d'amenage, sa traverse supérieure étant déplacée en aval de sa traverse inférieure. La machine en soi 10 est principalement constituée d'une poutre fixe 11 et d'une poutre mobile 12 disposées parallèlement l'une à l'autre et également parallèle au dispositif d'amenage 1. La poutre fixe 11 supporte un poste fixe 13 et un poste mobile 14 dit maître pour les raisons qui seront développées plus loin. La poutre 11 supporte également une bande de transfert 15 et les postes 13 et 14 cette poutre 11 sont destinés à l'équipement du montant droit MD du dormant. La poutre mobile 12 quant à elle supporte un poste fixe 16 et un poste mobile 17 dit esclave. Elle supporte également une bande de transfert 18 et est destinée à l'équipement du montant gauche MG du dormant.

La poutre mobile 12 comporte également un détecteur de positionnement 19 solidaire constitué de préférence d'un détecteur optique. Le dormant équipé est donc amené par le dispositif d'amenage 1 et arrive guidé par la rive 4, jusqu'à ce que la traverse supérieure arrive en vis-à-vis d'un détecteur 20 disposé de façon fixe par rapport à la bande de transfert 2 et à la rive de guidage 4. La poutre mobile 12 est alors déplacée jusqu'à ce que son détecteur 19 soit situé en dessous de la traverse et donc à ce moment la poutre mobile 12 est disposée de façon adéquate selon les dimensions du dormant.

Les deux bandes de transfert de la machine 15 et 18 sont alors mis en fonctionnement de façon motorisé à une vitesse synchronisée sur la vitesse des bandes de transfert 2 et 3 du dispositif d'amenage 4. Le dormant continue donc son avance guidé par la rive 4' prolongeant la rive 4 du dispositif d'amenage 1.

La traverse supérieure du montant passe alors au-dessus des deux détecteurs 21, 22 et la vitesse des bandes de transfert 15 et 18 n'est alors aucunement modifiée ; par contre lorsque la traverse inférieure passe sur le premier détecteur 21, la vitesse des bandes de transfert est réduite pour être totalement annulée lorsque la traverse inférieure rencontre le deuxième détecteur 22, où le dormant est alors en place pour son équipement, comme il est représenté sur la figure 1.

Alors sont mis en opération les dispositifs de bridage destinés à maintenir le dormant dans cette position de traitement.

Comme on peut déjà le comprendre, les postes fixes sont destinés à équiper simultanément les angles inférieurs droit et gauche du dormant et les postes mobiles à équiper simultanément les angles supérieurs droit et gauche ainsi qu'éventuellement les zones intermédiaires des montants qui doivent recevoir des ferrures intermédiaires.

De façon préférentielle ces composant seront pour les postes fixes les supports d'angle et pour les postes mobiles les paliers de compas et éventuellement les paliers intermédiaires dans le cas de montants de grande longueur.

Les dispositifs de bridage supérieurs et inférieurs, qui seront décrits plus précisément plus loin, sont référencés en 23 et 24 pour ce qui est des dispositifs de bridage associés aux postes fixes 13 et 16 et en 25 et 26 pour ce qui est des postes de bridage associés au poste mobile maître 14 et au poste mobile esclave 17. L'équipement de bridage est symétrique ; le dispositif de bridage 23 est identique et symétrique au dispositif de bridage 24 et le dispositif de bridage 25 est identique et symétrique au dispositif de bridage 26. Ces deux derniers dispositifs 25 et 26 qui sont destinés à compléter les deux premiers 23 et 24 ne sont en réalité que des dispositifs de butée. Ces quatre dispositifs sont montés sur des élévateurs afin d'être occultés au passage du dormant et venir se positionner en position supérieure lorsqu'ils sont mis en fonctionnement.

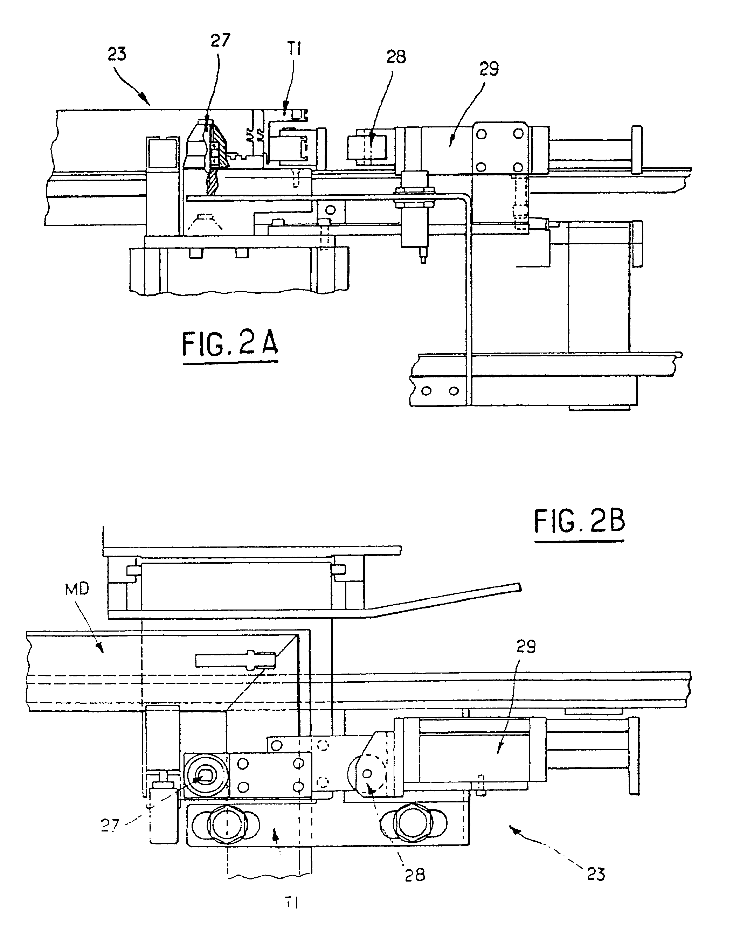

Les figures 2A et 2B représentent plus précisément les dispositifs de bridage 23 et 24 associés aux postes fixes 13 et 16. Plus exactement c'est le poste de bridage 23 qui est représenté, l'autre poste de bridage 24 lui étant symétrique par rapport à l'axe longitudinal de la machine et fonctionnant de façon simultanée.

Ce dispositif 23 est donc élevé au niveau du dormant et destiné à venir enserrer telle une mâchoire la traverse inférieure TI de celui-ci.

Il est constitué de façon préférentielle d'un galet selon un axe vertical 27 qui vient en appui avec le chant intérieur de la traverse inférieure TI et donc qui peut éventuellement être de forme adéquate pour réaliser cet appui de façon optimale et d'un autre galet par rapport à un axe vertical 28 qui lui est mobile actionné par un vérin 29 et est destiné à être amené en contact avec le chant extérieur de la traverse inférieure TI, qui est alors bloquée entre les deux galets 27 et 28. Le dormant est alors immobilisé par rapport au sens de défilement par les galets 27 et 28. En effet, tant que la poutre mobile 12 n'est pas immobilisée, le dormant doit pouvoir se déplacer en translation latérale.

L'opération suivante consiste à positionner les postes mobiles relativement au dormant. C'est le poste mobile 14 maître qui est déplacé, l'autre poste mobile 17 esclave étant déplacé de façon automatique simultanément. Le positionnement du poste maître et en conséquence du poste esclave est réalisé par l'intermédiaire de deux détecteurs 30 et 31 solidaires du poste mobile maître 14 et qui sont visibles sur la figure 1. Comme on peut le comprendre aisément, le poste 14 est translaté sur la poutre fixe 11 jusqu'à ce que le détecteur 30 rencontre la traverse supérieure dans le cas d'un dormant simple. La fonction du détecteur 31 qui vient quant à lui se positionner sous le montant droit MD est destiné à permettre le positionnement des postes mobiles 14, 17 dans le cas d'un dormant équipé d'une traverse intermédiaire.

En effet dans ce cas, le traitement se fait en au moins deux étapes à savoir tout d'abord le positionnement et le traitement par rapport à la traverse supérieure et à la traverse intermédiaire puis le positionnement et le traitement des postes par rapport à la traverse intermédiaire et la traverse inférieure.

Une fois les postes mobiles ainsi mis en place les dispositifs de butée 25 et 26 sont élevés dans le but de terminer le blocage du montant en position de traitement. Ces deux postes sont actionnés simultanément et sont constitués de façon identique symétriques par rapport au sens longitudinal de la machine.

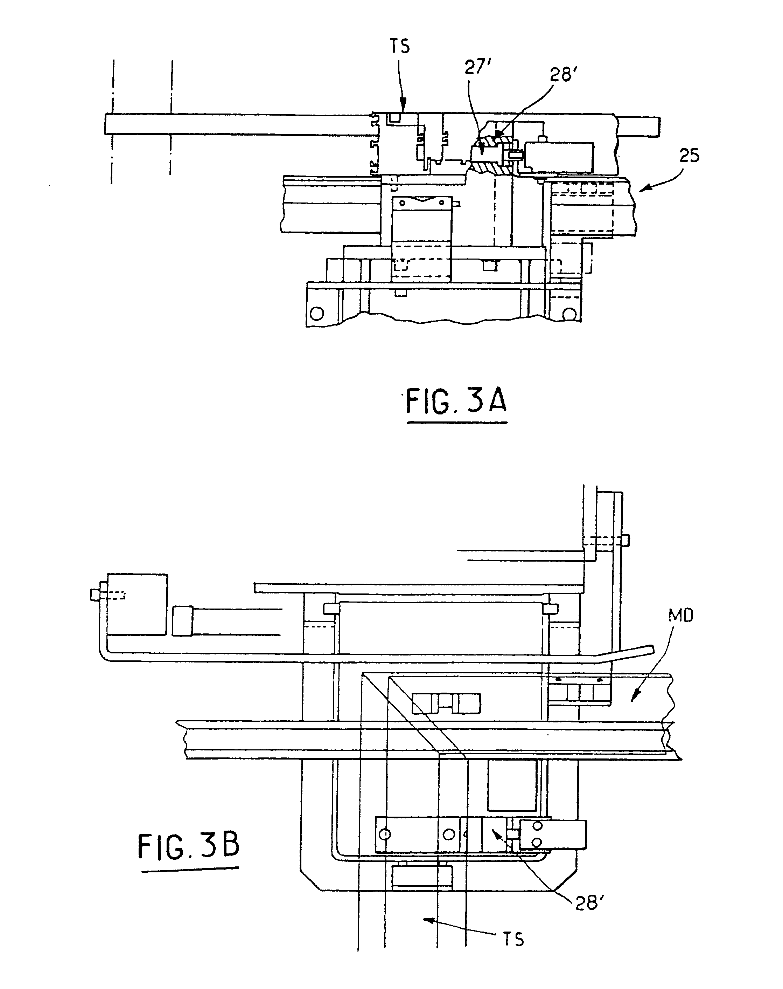

Le poste de butée droit 25 est décrit plus précisément sur les figures 3A et 3B, dans la position que l'on vient de décrire, les organes en saillie formant butée 28' de ce dispositif de butée 25 une fois élevé vient se positionner à l'intérieur du dormant en vis-à-vis de la traverse supérieure et à une certaine distance du chant intérieur de celle-ci.

Les quatre dispositifs de bridage 23, 24, 25 et 26 sont également pourvus de détecteurs afin de compléter de façon précise le positionnement du dormant. Ainsi arrivé à ce stade de mise en place, la poutre mobile 12 est déplacée vers l'arrière jusqu'à occultation des détecteurs équipant les dispositifs de bridage 23 et 24 des postes fixes 13 et 16, et les postes mobiles 14 et 17 sont déplacés jusqu'à occultation du détecteur 27' du dispositif de butée 25 du poste mobile maître 14 de la poutre fixe 11.

A ce stade du processus les postes de traitement 13, 14, 16 et 17 sont donc positionnés de façon bloquée par rapport au dormant.

L'équipement en soi du dormant par ces divers composants peut alors être réalisé grâce aux modules d'outillage constituant chacun de ces postes.

De façon globale, qu'il sera précisée plus loin, chaque poste fixe 13 et 16 est donc principalement équipé :

– d'un dispositif de bridage 23, 24 déjà décrit,
– d'un plateau magasin 30' qui est chargé équipé automatiquement des composants sur un dispositif d'entraînement et qui est déplacé en rotation pas-à-pas,
– d'un manipulateur 31 destiné à venir saisir sur le plateau magasin le composant et à venir le positionner avant sa fixation,
– d'une unité de perçage classique disposé sur un dispositif d'entraînement spécifique,
– d'une unité de vissage classique entraînée par un mécanisme d'actionnement spécifique.

Chaque poste mobile 14, 17 est quant à lui composé :

– d'un dispositif de butée 25, 26 déjà décrit,
– d'un plateau magasin 30 disposé sur un dispositif d'entraînement et qui est déplacé en rotation pas-à-pas et en translation aller et retour parallèlement à l'axe longitudinal de la machine,
– d'un manipulateur identique à celui des postes fixes,
– d'une unité de perçage,
– d'une unité de vissage,
– d'un gabarit de positionnement 32 qui dans le mode de réalisation préféré ici décrit se justifie par la constitution des composants à mettre en place et dont la fonction sera décrite plus loin.

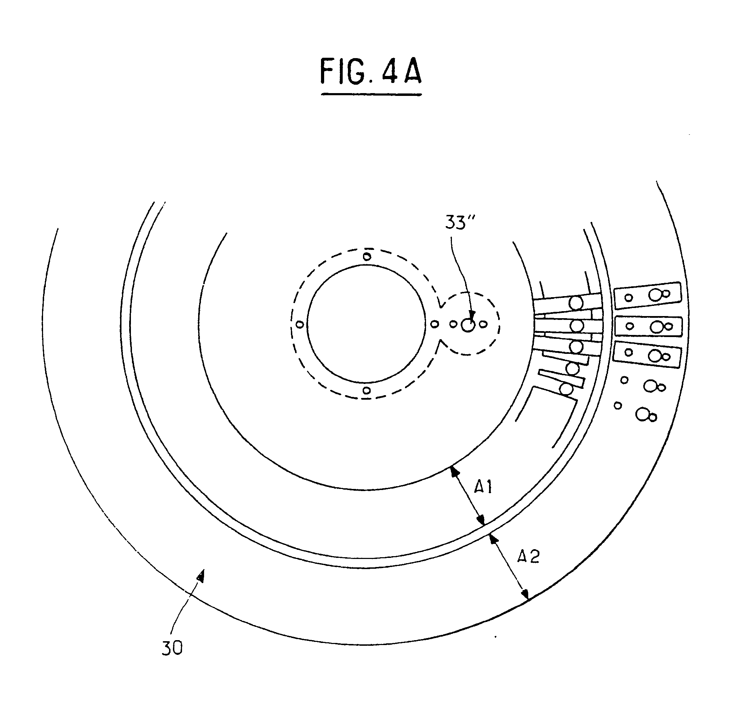

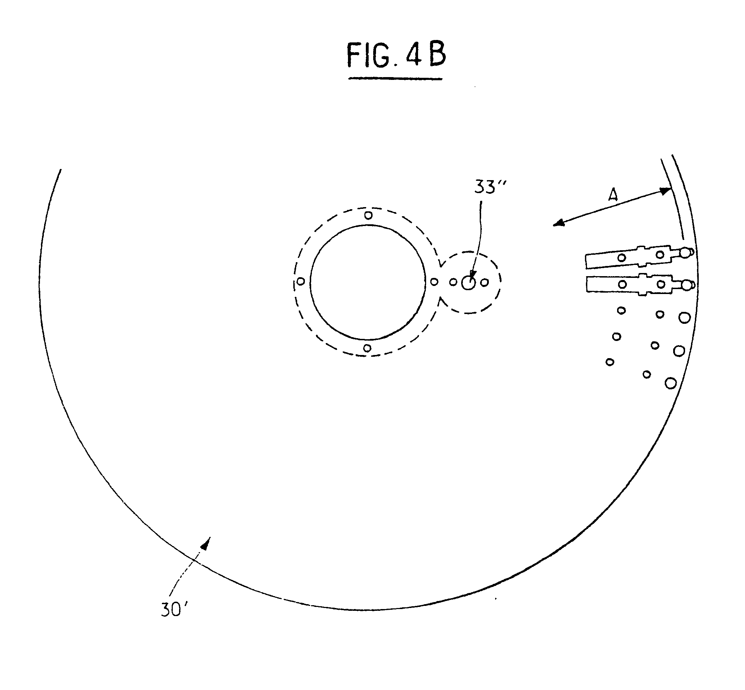

Les figures 4A et 4B représentent les deux types de plateaux magasins 30 et 30' destinés à équiper le mode de réalisation préféré de la machine automatique. De préférence ces plateaux sont réalisés en PVC. Les postes fixes 13 et 16 qui sont destinés à équiper les angles inférieurs du montant à l'aide d'un palier de supports d'angle à chaque angle sont équipés d'un plateau magasin 30' dit simple qui comme on peut le voir sur la figure 4B comporte une zone périmétrale A constituée de préférence de cavités adaptées pour que des paliers de support d'angle y soient emboîtés.

Par contre les postes mobiles 14 et 17 qui sont destinés à équiper d'une part les angles supérieurs de paliers de compas mais également éventuellement les zones intermédiaires des montants de paliers intermédiaires sont pourvus de plateaux magasins 30 ; ceux-ci comportent deux zones concentriques de chargement A1 et A2 dont l'une est destinée à avoir un certain nombre de paliers de compas et l'autre un certain nombre de paliers intermédiaires, la mise en place de ces composants se faisant de façon analogue au cas du plateau 30′ par un système de cavité d'emboîtement adéquate.

Le plateau 30 est mis en place sur un dispositif d'entraînement spécifique lui conférant d'une part un mouvement de rotation pas-à-pas et d'autre part un mouvement en translation aller retour.

Le dispositif d'entraînement du plateau 30′ destiné à lui conférer un simple mouvement de rotation pas-à-pas, peut être déduit du dispositif décrit.

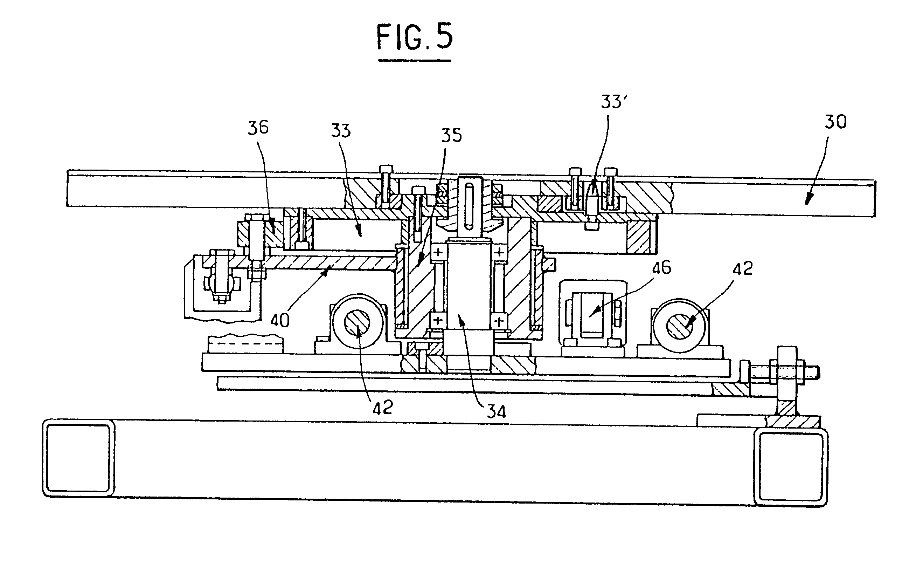

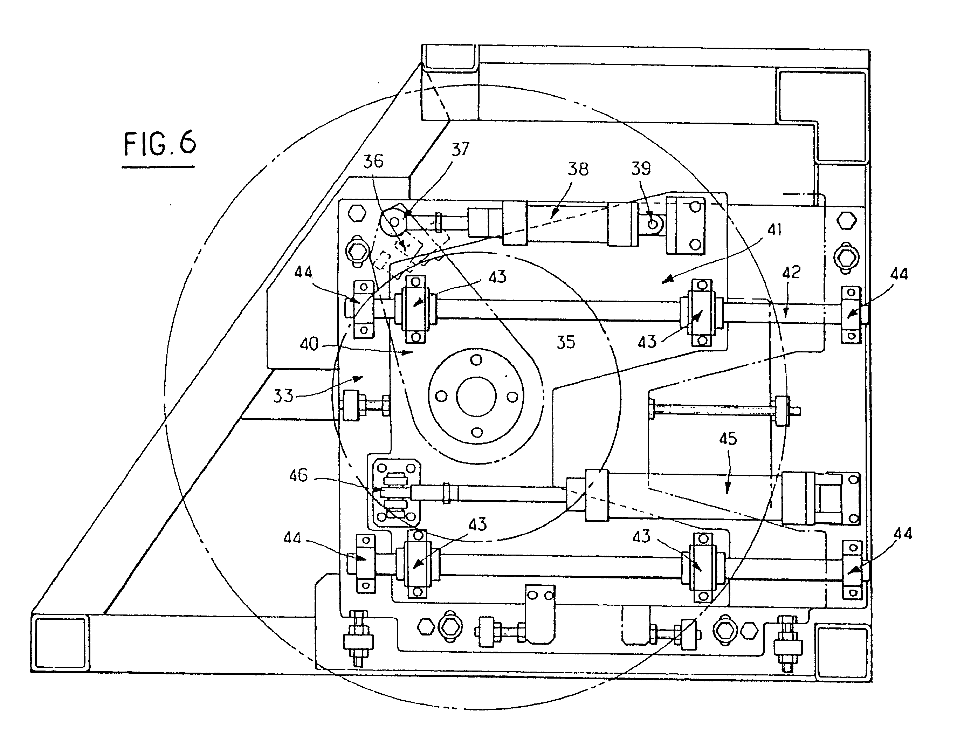

Ce dispositif d'entraînement du plateau 30 va être décrit plus précisément en se référant aux figures 5 et 6. La mise en place des plateaux magasins 30 sur ce dispositif d'entraînement se fait par emboîtement central sur un disque d'entraînement 33 et par blocage radial sur au moins un tenon 33′ faisant saillie sur le disque d'entraînement 33 et venant s'encastrer dans la cavité correspondante 33″ du plateau magasin 30.

Ce dispositif d'entraînement comporte donc un arbre central 34 équipé d'un limiteur de couple et sur le moyeu 35 duquel est fixé au moyen de vis ou analogue le disque d'entraînement 33.

Le dispositif d'actionnement pas-à-pas du disque d'entraînement 33 va maintenant être décrit plus précisément en se référençant sur les figures 5 et 6. Le disque d'entraînement 33 est une couronne dentée dans les dents de laquelle vient s'engréner un cliquet 36 actionné de façon à réaliser le déplacement pas-à-pas de cette couronne 33. Ce cliquet 36 est actionné par l'intermédiaire d'un dispositif à rochet 37 monté à l'extrémité de la tige d'un vérin 38 fonctionnant en aller retour et articulé en 39. Le dispositif de cliquet 36 est quant à lui monté sur un bras 40 articulé autour du moyeu 35 de l'arbre central 34.

Le dispositif d'entraînement du plateau magasin 30′ se limite donc à l'unité qui vient d'être décrite.

Comme il était précisé plus haut, le dispositif d'entraînement du plateau magasin 30 permet également le déplacement en translation sur une certaine course en aller et retour pour amener le ou les composants au droit de la pince du manipulateur 31, ce qui sera précisé plus loin.

Ce dispositif d'entraînement en translation est réalisé grâce à une plaque faisant fonction de chariot 41 qui est montée sur des axes de coulissement 42 de préférence au nombre de deux par l'intermédiaire de douilles à billes 43 solidaires de cette plaque 41 et montées en extrémité de façon fixe sur des paliers 44 fixés sur le châssis. L'actionnement en soi est réalisé par un vérin 45 dont l'extrémité de la tige est articulée en 46 sur la plaque chariot 41 et dont l'extrémité du corps est fixée de façon articulée sur le châssis.

Par coopération de l'actionnement du vérin 45 et du vérin 38, on obtient donc au moins deux déplacements du plateau magasin 30, un déplacement en translation aller retour sur la course du vérin 45 et un déplacement en rotation pas-à-pas par coopération du vérin 38 et du dispositif à cliquet 36. Ce dernier coopère également avec le limiteur de couple dont est équipé l'arbre central 34 pour permettre l'arrêt et la rotation définie par la denture du disque d'entraînement 33.

Par ailleurs les plateaux magasins 30, 30′ sont équipés au droit des composants de trous coopérant avec un ensemble de cellules photoélectriques et fibres optiques et commandant la rotation du plateau. Ainsi s'il n'existe pas de pièce positionnée au droit de la cellule photoélectrique, le vérin 38 est de nouveau actionné jusqu'à ce que le plateau magasin 30 ou 30′ se dispose à une position où il existe un composant à mettre en place. De préférence cet actionnement est déterminé afin que s'il manque plus de cinq pièces par exemple, le mécanisme s'arrête afin de permettre une vérification.

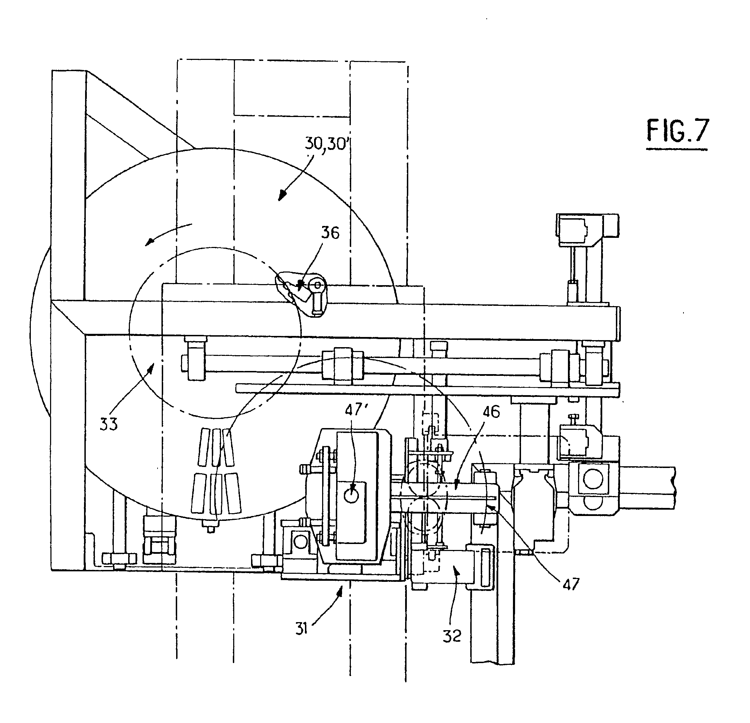

L'intérêt de cet actionnement du disque 33 du plateau magasin 30 ou 30′ va maintenant être explicité par le fonctionnement du manipulateur 31 qui vient saisir le composant adéquat sur le plateau pour venir le positionner sur le montant à équiper. Ce manipulateur 31 est représenté sur la figure 7, il comporte principalement un ensemble rotatif autour de l'axe 47′ supportant un bras 46 à l'extrémité libre duquel est disposée une pince 47 à deux mors dirigés vers le bas. En plus d'une translation verticale, le déplacement de ce manipulateur 31 consiste donc en un demi-cercle symbolisé par un trait mixte sur la figure 7 et en conséquence le déplacement pas-à-pas du plateau magasin 30, 30′ permet la prise de chacun des composants d'une des zones A1 ou A2 tandis que la translation de l'ensemble (plateau magasin et dispositif de déplacement pas-à-pas par cliquet) permet de passer d'une zone à l'autre à savoir de la zone A1 à la zone A2 et de la zone A2 à la zone A1.

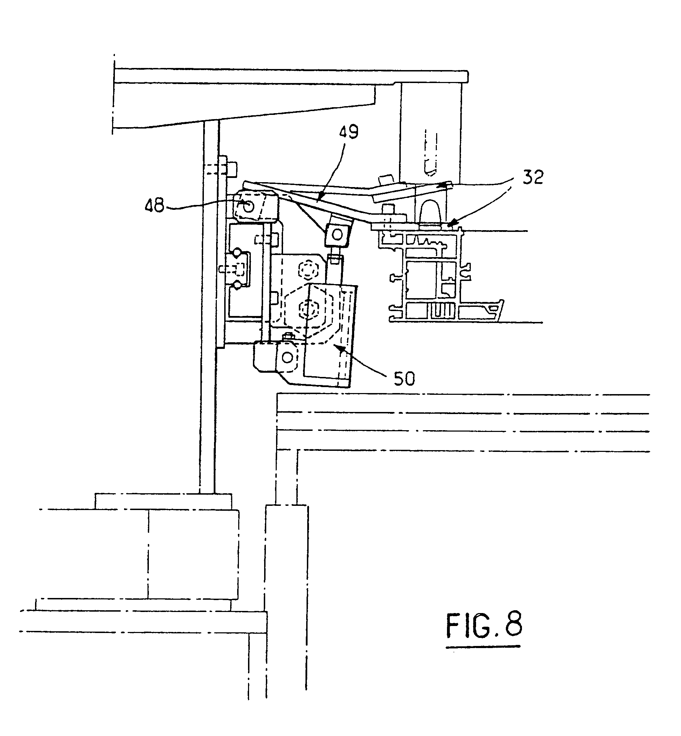

Le poste représenté sur la figure 7 est également équipé d'un gabarit de positionnement 32 décrit plus précisément sur la figure 8.

Ce gabarit 32 est un élément accessoire dont l'utilité va être précisée maintenant. Sur la plupart des composants de dormants de fenêtres en particulier sur les paliers sont prévus des tenons d'emboîtement qui facilitent et consolident leur fixation sur le montant. En effet il suffit alors de percer en général deux orifices dans le montant, d'emboîter ensuite les tenons en général au nombre de deux puis de mettre en place les vis de fixation. Lorsque sur certains composants ne sont pas prévus de tels tenons, pour compenser cette absence, la machine est équipée du gabarit 32 qui est destiné à guider le composant afin de permettre le vissage au droit des orifices des composants, à savoir dans l'exemple décrit du palier ou des paliers intermédiaires.

Pour être plaqué sur le montant M le gabarit 32 est actionné par un système d'articulation et de vérin, plus précisément il est articulé selon un axe horizontal 48 sur un chariot mobile sur le châssis du poste grâce à un bras 49 supportant de façon articulée la tige d'un vérin 50 ce vérin agissant lorsqu'il est rétracté pour appuyer le gabarit 32 sur le montant M et lorsqu'il est sorti, pour occulter le gabarit 32 de la zone de traitement.

Les composants destinés à équiper les montants étant en général fixés par vissage chaque poste comporte une unité de perçage et une unité de vissage. Ces unités de perçage et de vissage doivent être déplacées de façon verticale pour remplir leur fonction bien évidemment mais également doivent être déplacées de façon horizontale pour venir se positionner de façon adéquate à l'emplacement des orifices à réaliser destinés à recevoir les tenons des composants ainsi qu'au droit des passages de vis de chaque composant. Ces dispositifs de perçage et de vissage sont donc actionnés grâce à des dispositifs d'entraînement spécifiques permettant un positionnement horizontal en fonction de la pièce à fixer. Selon le mode de réalisation préféré, ceci est en particulier décrit pour les postes mobiles 14, 17 qui sont destinés à fixer soit des paliers de compas soit des palier intermédiaires et donc à permettre au moins deux ensembles différents de positionnement de perçage et de vissage.

Les unités d'outil des postes fixes destinés à ne fixer qu'un type d'outil peuvent être déduits de ce dispositif décrit.

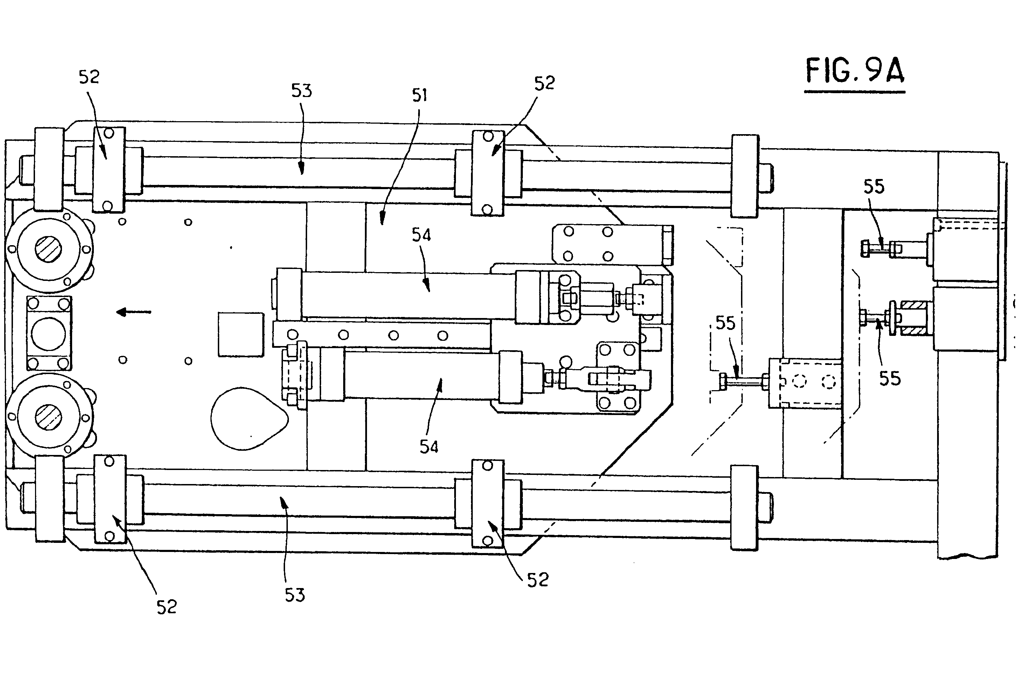

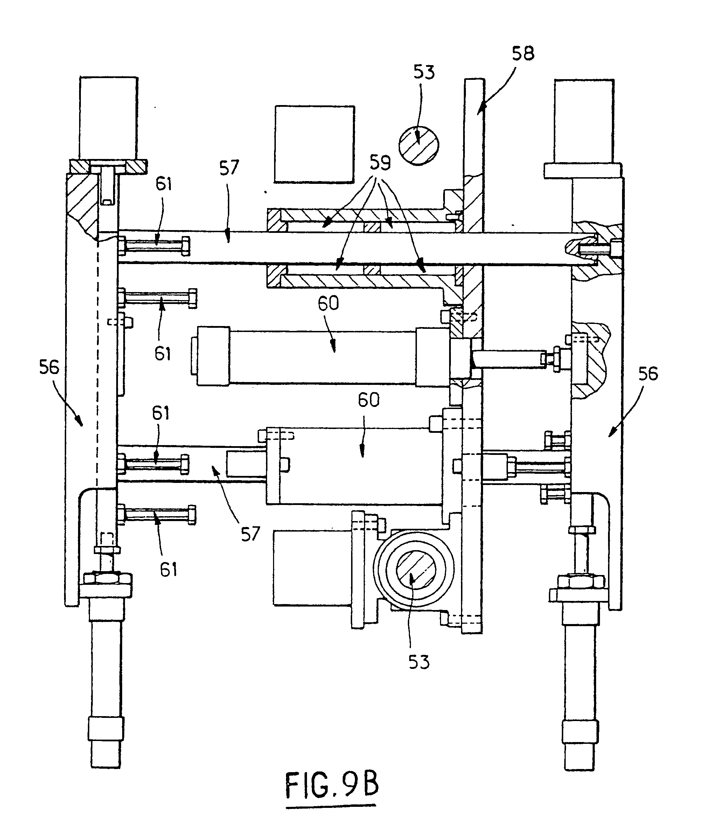

Ce dispositif d'actionnement spécifique est représenté sur les figures 9A et 9B. Selon l'exemple décrit, ils sont destinés dont à équiper le poste mobile maître 14 et le poste mobile esclave 17. Ils doivent permettre le positionnement de l'ensemble unité de perçage et unité de vissage selon cette réalisation :

    – une position de dégagement où ces unités sont latéralement décalées de la zone de travail du dormant,
    – des positions de perçage,
    – des positions de vissage, trois dans le cas ou le composant est fixé au dormant par trois vis, comme c'est le cas pour le palier de compas.

La figure 9A est une vue dans le plan horizontal de l'unité d'entraînement des outils de travail et permet de voir plus précisément les dispositifs de déplacement et de réglage perpendiculairement au sens longitudinal de la machine et la figure 2B est une vue selon C de cette unité d'entraînement représentant les dispositifs de déplacement et de réglage des outils parallèlement au sens longitudinal de la machine.

Le mécanisme de réglage et de déplacement perpendiculaire au sens longitudinal de la machine est principalement constitué d'une plaque support 51 montée par l'intermédiaire de douilles à billes 52 sur deux arbres de coulissement 53 horizontaux.

L'actionnement de la translation horizontale est réalisé par un jeu de deux vérins 54 qui entraînent le déplacement de la plaque support 51 conformément au trait mixte représenté sur la figure 9A. Le réglage selon les différentes positions nécessaires est représenté par un jeu de butées réalisées par les vis ou boulons ou équivalents 55.

Selon la figure 9B l'unité d'entraînement dans le sens parallèle à l'axe longitudinal de la machine est réalisé de façon relativement équivalente. Plus précisément les supports d'outil 56 sont guidés en translation par les arbres 57 coulissant sur la plaque fixe de châssis grâce à des systèmes de douilles à billes 59 et le support d'outil 56 est actionné grâce à un système de vérins 60, le réglage étant réalisé par butée contre un jeu de vis ou boulons ou équivalents 61.

En résumé dans le cas d'un dormant pour une fenêtre à un vantail seul, le poste fixe et le poste mobile de l'une ou l'autre des poutres seront actifs selon que l'ouvrant est à ouverture gauche ou a ouverture droite. Les deux postes travaillent alors simultanément pour la pose des composants situés aux angles supérieurs et inférieurs de ce cadre dormant. Le poste mobile se déplace dans un second temps s'il doit assurer la pose d'un autre élément intermédiaire entre ces deux composants situés dans les angles. En effet, dans les ouvrants de grande hauteur, la pose du palier du support d'angle dans l'angle inférieur du dormant et la pose du palier de compas du palier intermédiaire ne sont pas toujours suffisants. Le poste mobile se déplace donc alors pour une séquence supplémentaire et assurer une seconde pose de palier intermédiaire. Pendant ce temps, au moins deux des trois autres postes assurent le bridage du dormant.

Dans le cas d'un dormant destiné à deux ouvrants, ce sont simultanément les quatre postes qui assurent la pose simultanée sur chaque montant respectif des composants les plus hauts avec éventuellement les séquences suivantes telles que décrites.

Dans le cadre d'un dormant avec au moins une traverse intermédiaire, la machine sélectionne dans un premier temps la traverse intermédiaire en tant que traverse supérieure pour réaliser les séquences citées ci-dessus lorsque c'est la partie inférieure constituée par la traverse inférieure du dormant et la traverse intermédiaire qui est équipée d'ouvrants. Si c'est la partie supérieure constituée par la traverse intermédiaire et la traverse supérieure du dormant, la machine identifie la première immobilisation de l'ouvrant à partir des postes fixes sur la traverse intermédiaire et assure les séquences déjà décrites.

Dans le cas où les deux parties sont équipées d'ouvrant, la machine assure le montage des composants dans la partie supérieure, c'est-à-dire la première immobilisation sera assurée par les postes fixes de la traverse intermédiaire, dans un second temps, le dormant est placé et immobilisé par les postes fixes sur sa traverse inférieure.

Il est rappelé que ne sont décrits de façon précise dans la description que le type de poste d'outillage le plus complexe, à savoir celui qui comporte un plateau à au moins deux zones de chargement et qui nécessite un maximum de positionnement des outils compte tenu des composants à mettre en place. Par ailleurs, le gabarit décrit n'est bien évidemment utile que dans le cas de la pose d'un composant non pourvu de tenons inférieurs d'emboîtement.

La machine décrite comporte quatre postes de travail mobiles ou fixes mais un seul poste de travail peut à lui seul assurer le montage de tous les composants sur toute la longueur du dormant et dans ce cas le dormant est positionné automatiquement sur le poste de travail ou le poste se déplace automatiquement le long de chacun des dormants. Dans ce cas, on confère à l'ensemble de ce poste une rotation de 180°, et dans ce cas, un dispositif d'inversion des composants est réalisé par la rotation de la pince.

**Revendications**

1) Unité automatique de pose de composants sur dormants simples ou multiples de fenêtres, porte-fenêtres, portes ou équivalents, en particulier destinée à la pose de paliers d'angle, de paliers de compas et de paliers intermédiaires ou analogues, caractérisée en ce qu'elle comporte un dispositif d'amenage (1) des dormants préfabriqués assurant l'alimentation automatique de ceux-ci, et au moins un poste équipé de moyens automatiques d'alimentation, de pose et de fixation de composants sur les montants du dormant.

2) Unité selon la revendication 1, caractérisée en ce que le dispositif d'amenage (1) comporte une rive latérale (4) de guidage et un dispositif de transfert (2, 3).

3) Unité selon la revendication 1 caractérisée en ce que le poste est équipé de moyens d'entraînement pour la pose de composants sur la longueur du montant de dormant.

4) Unité selon la revendication 1, caractérisée en ce que lesdits moyens d'alimentation en composants sont constitués d'un plateau magasin (30, 30') circulaire comportant au moins une zone (A, A1, A2) circulaire pourvue de moyens de maintien d'une série de composants.

5) Unité selon la revendication 4, caractérisée en ce que le plateau magasin (30, 30') est entraîné en rotation pas-à-pas grâce à un dispositif de cliquet, rochet et vérin.

6) Unité selon la revendication 5, caractérisée en ce que le plateau (30) comporte au moins deux zones (A1, A2) concentriques pourvues de moyens de maintien d'au moins deux séries de composants.

7) Unité selon la revendication 6, caractérisée en ce que le plateau (30) est entraîné en translation sur une course correspondant à la distance moyenne entre les zones les plus éloignées.

8) Unité selon l'une quelconque des revendications 4 à 7, caractérisée en ce qu'il est associé à chaque plateau magasin (30, 30') un manipulateur (31) dont le bras (46) pourvu d'une pince de préhension (47) est entraîné par un ensemble rotatif sur 180°.

9) Unité selon la revendication 1, caractérisée en ce que le poste est pourvu d'au moins une unité de perçage et d'une unité de vissage à trois degrés de liberté.

10) Unité selon la revendication 9, caractérisée en ce que l'entraînement dans le plan horizontal des unités de perçage et de vissage est réalisé par un dispositif d'entraînement constitué de deux ensembles de translation par guidage et vérin parallèlement et perpendiculairement à l'axe longitudinal de la machine.

11) Unité selon la revendication 10, caractérisée en ce que le déplacement des unités de vissage et perçage est réglable par un jeu de butées, actives ou escamotées.

12) Unité automatique selon l'une quelconque des revendications précédentes, caractérisée en ce qu'elle comporte au moins une poutre supportant au moins un poste équipé de moyens automatiques d'alimentation, de pose et de fixation de composants.

13) Unité selon la revendication 12, caractérisée en ce que la poutre (11, 12) supporte un poste fixe (13, 16), un poste mobile (14, 17) et une bande de transfert (15, 18).

14) Unité selon la revendication 13, caractérisée en ce que le poste mobile (14, 17) est équipé de moyens d'entraînement pour la pose de composants sur la longueur du montant de dormant.

15) Unité selon la revendication 12, caractérisée en ce que l'amenage, le ralentissement et l'arrêt du dormant sur la bande de transfert (15, 18) sont réalisés grâce aux détecteurs (20, 21, 22).

16) Unité selon la revendication 12, caractérisée en ce que le poste fixe (13, 16) est pourvu de dispositifs de bridage montés sur élévateur et enserrant la traverse correspondante du dormant.

17) Unité selon la revendication 16, caractérisée en ce que le poste mobile ( 14, 17 ) est pourvu de dispositifs de butée (25, 26) fixes par rapport à ce poste.

18) Machine automatique de pose de composants sur dormants simples et multiples de portes ou fenêtres, en particulier destinée à la pose de paliers d'angle, de paliers de compas, de paliers intermédiaires ou équivalents, comportant deux unités automatiques conformes à l'une quelconque des revendications 12 à 17 et caractérisée en ce que :
   – l'une des poutres (11) est fixe et supporte un poste fixe (13), un poste mobile (14) et une bande de transfert (15) ;
   – l'autre poutre (12) est mobile et supporte un poste fixe (16), un poste mobile (17) et une bande de transfert (18), ces deux poutres (11, 12) étant parallèles l'une à l'autre, le poste mobile (14) de la poutre fixe (11) étant maître et le poste mobile (17) de la poutre mobile (12) étant esclave.

19) Machine selon la revendication 18, caractérisée en ce que le positionnement de la poutre mobile (12) est réalisé par un détecteur (19) solidaire de celle-ci et venant se positionner en vis-à-vis du dormant à la sortie du dispositif d'amenage (1).

FIG.1

EP 0 444 988 A1

FIG. 2 A

FIG. 2 B

## FIG. 3A

## FIG. 3B

# FIG. 4 A

33"

A1

A2

30

# FIG. 4 B

# FIG.5

EP 0 444 988 A1

FIG.6

FIG.7

FIG.8

FIG. 9A

EP 0 444 988 A1

FIG.9B

Office européen
des brevets

# RAPPORT DE RECHERCHE EUROPEENNE

Numero de la demande

EP    91 40 0308

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| P,X | EP-A-401094 (FERCO)<br>* colonne 2, lignes 29 - 57 *<br>--- | 1 | B23P19/04 |
| P,X | EP-A-373991 (FERCO)<br>* colonne 1, ligne 49 - colonne 2, ligne 2 *<br>--- | 1 | |
| A | US-A-3772757 (GOLDSTEIN)<br>* le document en entier *<br>--- | 1, 18 | |
| A | EP-A-124763 (IMA-NORTE MASCHINENFABRIKEN KLESSMAN)<br>--- | 1, 18 | |
| A | FR-A-2560091 (DROUOT)<br>* page 1 *<br>--- | 1 | |
| A | DE-A-2166857 (UNIQUICK GIETZELT)<br>----- | | |

**DOMAINES TECHNIQUES RECHERCHES (Int. Cl.5)**

B23P
E06B
E04F

Le présent rapport a été établi pour toutes les revendications

| Lieu de la recherche | Date d'achèvement de la recherche | Examinateur |
|---|---|---|
| LA HAYE | 14 MAI 1991 | RIS M. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.................................................................
& : membre de la même famille, document correspondant

EPO FORM 1503 03.82 (P0402)